# DEMANDE DE BREVET EUROPEEN

(11) **EP 2 219 282 A1**
(43) Date de publication de la demande: **18.08.2010**
(21) Numéro de dépôt: 10290064.4
(22) Date de dépôt: 11.02.2010
(51) Int. Cl.: H02J 9/00, H03K 17/94

(54) **Dispositif de gestion de l'alimentation d'au moins un module électrique de l'interface entre un appareil électroménager et un utilisateur**

(30) Priorité: 13.02.2009 FR 0950952
(71) Demandeur: FagorBrandt SAS, 92500 Rueil Malmaison (FR)
(72) Inventeur: Oudart, Pascal, 45240 La Ferte Saint Aubin (FR); Chalus, Stéphane, 45000 Orleans (FR)
(74) Mandataire: Stankoff, Hélène

(57) **Abrégé**

Un dispositif de gestion de l'alimentation d'un module électrique d'interface (10) entre un appareil électroménager et un utilisateur comporte des moyens de commutation (21) de l'alimentation du module électrique d'interface (10), lesdits moyens de commutation (21) étant adaptés à être placés dans un premier mode dans lequel ils sont adaptés à couper l'alimentation du module électrique d'interface (10) lorsque l'appareil électroménager est en état de veille, et dans un second mode dans lequel ils sont adaptés à rétablir l'alimentation coupée du module électrique d'interface (10) lorsqu'une action est exercée par l'utilisateur sur un bouton dédié (30).

## Description

La présente invention concerne un dispositif de gestion de l'alimentation d'au moins un module électrique de l'interface entre un appareil électroménager et un utilisateur.

Cet appareil électroménager est par exemple un four de cuisson.

Les appareils électroménagers comportent une interface entre lui-même et l'utilisateur, connue comme "Interface homme-machine" (IHM). Cette interface comporte notamment des afficheurs et des organes de commande.

En général, l'interface homme-machine, que l'appareil électroménager soit en mode de fonctionnement ou en mode veille, est alimenté, notamment afin d'afficher certaines informations, telles que l'heure, des paramètres ou des programmes de cuisson, et afin de pouvoir réagir aux manipulations d'un utilisateur de l'appareil électroménager.

Même lorsque l'appareil électroménager est en veille, le module électrique chargé de mettre en oeuvre l'interface homme-machine est alimenté notamment afin de répondre aux actions de l'utilisateur sur l'appareil électroménager.

Ainsi, ce module électrique d'interface homme-machine consomme de l'énergie électrique, que l'appareil électroménager soit dans un mode de fonctionnement ou dans un état de veille.

La présente invention a pour but de résoudre les inconvénients précités et de proposer un dispositif de gestion de l'alimentation adapté à réduire la consommation électrique lorsqu'un appareil électroménager est en état de veille.

A cet effet, la présente invention vise un dispositif de gestion de l'alimentation d'un module électrique d'interface entre un appareil électroménager et un utilisateur.

Selon l'invention, ce dispositif de gestion comporte des moyens de commutation de l'alimentation dudit module électrique d'interface, les moyens de commutation étant adaptés à être placés dans un premier mode dans lequel ils sont adaptés à couper l'alimentation dudit module électrique d'interface lorsque l'appareil électroménager est en état de veille, et dans un second mode dans lequel ils sont adaptés à rétablir l'alimentation coupée dudit module électrique d'interface lorsqu'une action est exercée par l'utilisateur sur un bouton dédié.

Ainsi, lorsque l'appareil électroménager est en état de veille, le module électrique d'interface homme-machine n'est pas alimenté. Ce module électrique reste ainsi jusqu'à ce que l'utilisateur exerce une action sur le bouton dédié. Ceci provoque le rétablissement de l'alimentation du module électrique d'interface qui est alors activé, afin par exemple d'utiliser l'appareil électroménager.

L'interface homme-machine peut alors être utilisée normalement, les commandes de l'utilisateur agissant sur l'appareil électroménager.

Par conséquent, la consommation électrique de l'appareil électroménager en état de veille est réduite.

Par exemple, lorsqu'une action est exercée par l'utilisateur sur ledit bouton dédié, ledit bouton dédié génère un signal électrique adapté à placer les moyens de commutation dans ledit second mode.

Ainsi, lorsque l'utilisateur exerce une action sur le bouton dédié, l'alimentation du module électrique d'interface qui était coupée, est rétablie.

L'utilisateur peut ensuite utiliser l'appareil électroménager.

Selon une caractéristique préférée, le dispositif de gestion comporte des moyens de génération dudit signal électrique adaptés à maintenir les moyens de commutation dans le second mode.

Ces moyens de génération du signal électrique prennent la relève du bouton dédié dans la génération du signal électrique adapté à placer les moyens de commutation dans le second mode.

En effet, le bouton dédié est responsable du rétablissement de l'alimentation coupée du module électrique d'interface et les moyens de génération du signal électrique sont responsables du maintien de l'alimentation.

Selon un mode de réalisation, ledit bouton dédié est un bouton mécanique, notamment un bouton poussoir.

Ainsi, la consommation électrique de l'appareil électroménager est encore réduite, dès lors qu'un bouton mécanique présente une consommation électrique nulle lorsque l'utilisateur n'exerce pas d'action sur lui, c'est-à-dire qu'il est au repos.

Selon un autre mode de réalisation, ledit bouton dédié est un bouton électronique, notamment une touche sensitive, comportant deux bornes de sortie adaptées à être connectées audit dispositif de gestion de l'alimentation et un interrupteur comprenant deux bornes reliées respectivement auxdites bornes de sortie, lesdites bornes de sortie étant adaptées à alimenter ledit bouton dédié et ledit interrupteur étant adapté à être ouvert lorsque l'appareil électroménager est en mode veille et à être fermé lorsque l'appareil électroménager est placé en mode de fonctionnement.

Par conséquent, lorsque l'appareil électroménager est en mode de fonctionnement, l'interrupteur est fermé et les bornes de sortie du bouton dédié sont au même potentiel. Ainsi, le bouton dédié n'étant pas alimenté, il ne consomme pas de puissance électrique.

Ledit bouton dédié comporte des moyens de stockage d'énergie adaptés à alimenter ledit bouton dédié pendant une période de temps prédéfinie pendant laquelle lesdits moyens de commutation sont placés dans le second mode.

Grâce à cette réserve d'énergie, malgré le fait que lorsque l'appareil électroménager est en mode de fonctionnement, le bouton dédié n'est plus alimenté, pendant cette période de temps prédéfinie, le bouton dédié continue à générer le signal électrique adapté à placer les moyens de commutation dans le second mode, en attendant que les moyens de génération du signal électrique prennent sa relève.

Selon une caractéristique préférée, des moyens de commande sont adaptés à générer un signal de commande de veille adapté à placer les moyens de commutation dans le premier mode.

Par conséquent, les moyens de commande sont adaptés à placer des moyens de commutation dans le premier mode, c'est-à-dire qu'ils gèrent la coupure de l'alimentation du module électrique lors de la mise en veille de l'appareil électroménager.

La présente invention concerne selon un deuxième aspect, un appareil électroménager, notamment un four de cuisson, comportant au moins un module électrique d'interface entre l'appareil électroménager et un utilisateur et un dispositif de gestion de l'alimentation du module électrique d'interface conforme à l'invention, le module électrique d'interface comportant un bouton dédié.

Cet appareil électroménager présente des caractéristiques et avantages analogues à ceux décrits précédemment en relation avec le dispositif de gestion de l'alimentation.

En particulier, il est possible de diminuer la consommation électrique de l'appareil électroménager lorsqu'il se trouve en mode veille.

D'autres particularités et avantages de l'invention apparaîtront encore dans la description ci-après.

Aux dessins annexés, donnés à titre d'exemples non limitatifs :
- la figure 1 représente un four selon un mode de réalisation de l'invention;
- la figure 2 est un schéma représentant un mode de réalisation d'un dispositif de gestion d'alimentation conforme à l'invention ; et
- la figure 3 est un schéma représentant un mode de réalisation d'une partie du schéma de la figure 2.

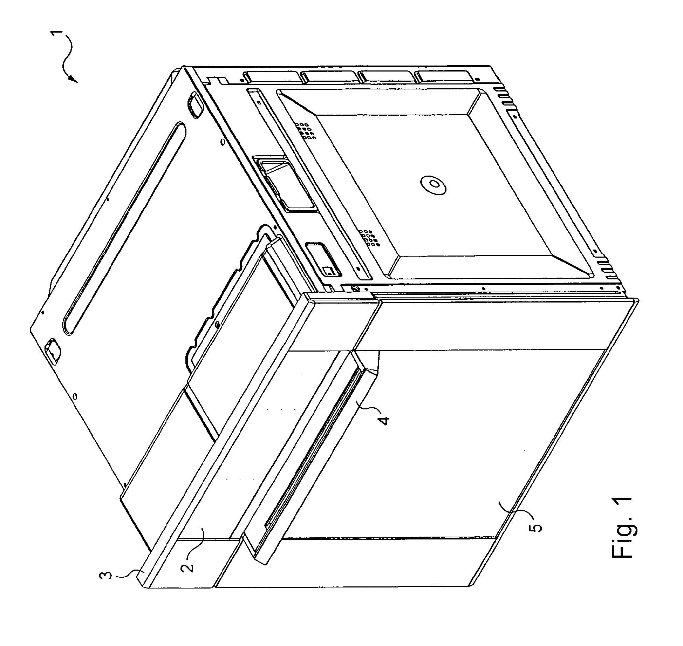

On va décrire tout d'abord en référence à la figure 1 un type d'appareil électrique adapté à mettre en oeuvre la présente invention.

Dans ce mode de réalisation, l'appareil électrique est un four de cuisson, et par exemple, un four de cuisson électrique 1.

Bien entendu, la présente invention n'est pas limitée à ce type d'appareil mais peut s'appliquer à tout type d'appareil électroménager, et notamment une table de cuisson, une cuisinière, un lave-linge et/ou sèche linge, un lave-vaisselle.

Dans cet exemple, le four de cuisson 1 est un four de type encastrable.

De manière classique, le four comporte un bandeau de commande 2 disposé sur la façade 3 du four 1.

Un tel bandeau de commande 2 correspond à l'interface entre le four de cuisson et un utilisateur. Cette interface comprend des organes de commande (bouton poussoir, bouton rotatif, touche sensitive) et des afficheurs (non représentés sur la figure).

Dans cet exemple, le bandeau de commande 2 est disposé au-dessus de la poignée 4 de la porte 5 d'accès à la cavité du four 1.

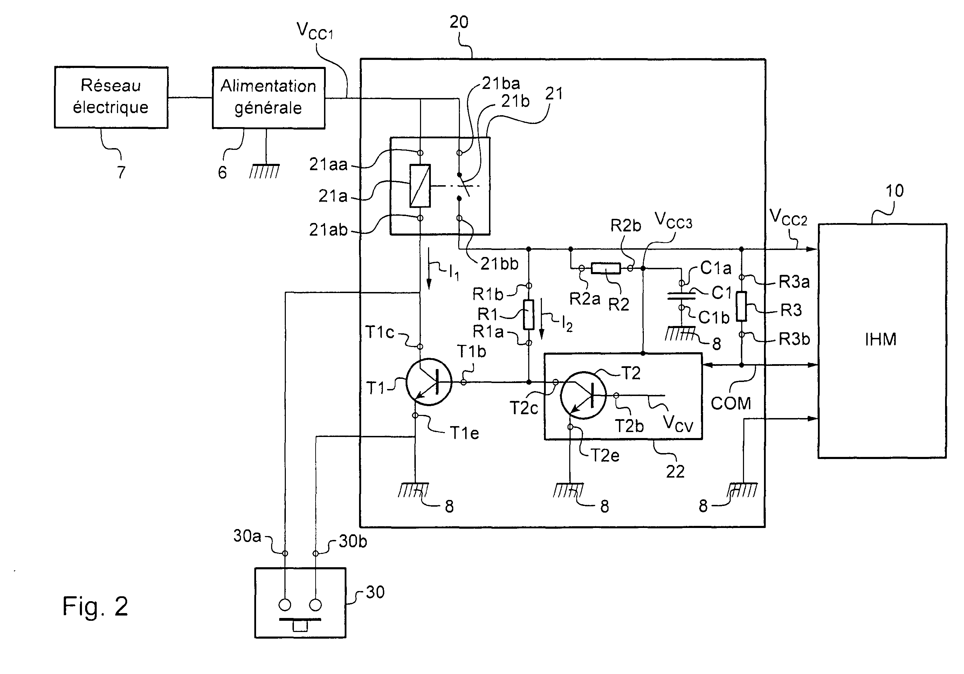

Le fonctionnement de ce bandeau de commande 2 est géré par un module électrique (non représenté). Dans la suite du document, on nommera module électrique d'interface (référencé 10 à la figure 2) l'ensemble formé par le bandeau de commande 2 et le module électrique le gérant. Ce module électrique d'interface est connu sous le terme "interface homme-machine" (IHM)

On va décrire à l'aide de la figure 2, un mode de réalisation d'un dispositif de gestion de l'alimentation d'un module électrique d'interface homme-machine conforme à l'invention.

Comme cité ci-dessus, l'alimentation du module électrique d'interface 10 entre le four de cuisson 1 et l'utilisateur est gérée par un dispositif de gestion de l'alimentation 20 représenté à la figure 2.

En général, le four de cuisson 1 comporte un module d'alimentation 6 adapté à générer des signaux d'alimentation nécessaires pour l'alimentation des modules électriques, telles que des cartes électroniques gérant le fonctionnement et la sécurité du four.

Ici, le dispositif de gestion d'alimentation 20 du module électrique d'interface 10 est intégré dans une carte électronique chargée de la gestion du fonctionnement et de l'alimentation du four de cuisson 1.

Néanmoins, le dispositif de gestion d'alimentation 10 peut être monté sur une carte électronique indépendante.

Ce module d'alimentation 6 génère ici un signal d'alimentation V_{cc1} adapté à alimenter le module électrique d'interface 10, à partir de la tension du réseau électrique ou secteur 7.

En effet, le module d'alimentation 6 génère un signal d'alimentation V_{cc1}, celui-ci étant un signal d'entrée au dispositif de gestion d'alimentation 20.

Le dispositif de gestion d'alimentation 20 comporte des moyens de commutation 21 de l'alimentation du module électrique d'interface 10.

Les moyens de commutation 21 ont comme entrée le signal d'alimentation V_{cc1} et génèrent éventuellement en sortie un second signal d'alimentation V_{cc2}.

Ici, les moyens de commutation 21 sont constitués d'un relais électromécanique. Ce relais électromécanique 21 comporte, de manière générale, un électroaimant 21 a et un interrupteur 21 b.

Ainsi, le signal d'alimentation V_{cc1} est relié à une borne d'entrée 21 aa de l'électroaimant 21a, ainsi qu'à une borne d'entrée 21ba d'un premier interrupteur 21 b.

On notera que les moyens de commutation 21, ici le relais électromécanique 21, peuvent comporter d'autres d'interrupteurs. Ainsi, par exemple, un second interrupteur (non représenté) pourrait être destiné à couper un autre signal d'alimentation adapté à alimenter d'autres modules de l'appareil électroménager.

Bien entendu, d'autres types de moyens de commutation peuvent être employés, comme par exemple des transistors.

Comme il sera décrit plus en détail ci-dessous, lorsqu'aucun courant circule à travers l'électroaimant 21a, l'interrupteur 21b est ouvert, le relais 21 se trouvant alors dans un premier mode. Lorsque le relais 21 se trouve dans ce premier mode, le signal d'alimentation V_{cc1} en entrée n'est pas transmis à la sortie du relais 21. Par conséquent, le module électrique d'interface 10 n'est pas alimenté.

Au contraire, lorsqu'un courant circule à travers l'électroaimant 21a, l'interrupteur 21 b est fermé, le relais 21 se trouvant alors dans un second mode. Lorsque le relais 21 se trouve dans ce second mode, le signal d'alimentation V_{cc1} en entrée est transmis à la sortie du relais 21, c'est-à-dire que le relais 21 génère le second signal d'alimentation V_{cc2}. Le module électrique d'interface 10 est alors alimenté.

Le dispositif de gestion d'alimentation 20 comporte en outre un premier transistor bipolaire T1. Le collecteur T1c de ce premier transistor bipolaire T1 est relié à la borne de sortie 21 ab de l'électroaimant 21 a, l'émetteur T1 e est connecté au potentiel de référence 8 (ici de 0 V), et la base T1 b est reliée à une première borne R1 a d'une première résistance R1 et au collecteur T2c d'un second transistor bipolaire T2.

L'émetteur T2e du second transistor bipolaire T2 est connecté au potentiel de référence 8, et sa base T2b est connectée à un signal de commande de veille V_{cv} qui est généré par les moyens de commande 22. Dans ce mode de réalisation, le second transistor T2 est disposé à l'intérieur des moyens de commande 22, le signal de commande de veille V_{cv} étant un signal interne aux moyens de commande 22. Néanmoins, dans d'autres modes de réalisation, le second transistor T2 peut être disposé à l'extérieur des moyens de commande 22, le signal de commande de veille V_{cv} étant alors un signal en sortie des moyens de commande 22.

Les autres composants électroniques des moyens de commande 22 ne seront pas décrits ici, dès lors qu'ils ne relèvent pas d'importance particulière pour la mise en oeuvre de l'invention.

Une seconde borne R1 b de la première résistance R1 est reliée à une borne de sortie 21bb de l'interrupteur 21b du relais 21, ainsi qu'à une première borne R2a d'une seconde résistance R2. Une seconde borne R2b de la seconde résistance R2 est reliée à une première borne C1a d'un condensateur C1. Une seconde borne C1b du condensateur C1 est connectée au potentiel de référence 8.

La tension prise à la seconde borne R2b de la seconde résistance R2 correspond à un troisième signal d'alimentation V_{cc3}, et sert à l'alimentation des moyens de commande 22.

Les moyens de commande 22 comportent un signal d'entrée/sortie COM, par lequel ils sont reliés au module électrique d'interface 10. Ce signal sert à échanger des informations ou des commandes comme il sera décrit ci-dessous.

Une troisième résistance R3 est reliée par une première borne R3a au second signal d'alimentation Vcc2 et par une seconde borne R3b au signal d'entrée/sortie COM.

Enfin, le collecteur T1c et l'émetteur T1e du premier transistor bipolaire T1 sont reliés respectivement à une première 30a et une seconde 30b borne du bouton dédié 30.

On va décrire ensuite le fonctionnement du dispositif de gestion d'alimentation 20 représenté à la figure 2.

Lorsque le four de cuisson 1 se trouve en mode veille, et que l'utilisateur s'apprête à l'utiliser, il exerce une action sur le bouton dédié 30.

Dans cet exemple, l'action exercée par l'utilisateur consistant à pousser le bouton 30.

A titre d'exemple nullement limitatif, le bouton 30 peut être un bouton poussoir ou une touche sensitive. Ce bouton est par exemple placé sur le bandeau de commande 2 du four de cuisson 1.

Lorsque l'utilisateur pousse le bouton 30, ceci génère un signal électrique, ici un courant. Ainsi, l'électroaimant 21 a du relais 21 est traversé par un courant I1. Le fait qu'un courant I1 traverse l'électroaimant 21a provoque la fermeture de l'interrupteur 21 b du relais 21.

Par conséquent, le relais 21 est alors placé dans son second mode et le deuxième signal d'alimentation V_{cc2} est généré. Ainsi, le premier transistor bipolaire T1 est rendu passant, et le second transistor bipolaire T2 est bloqué.

Du fait que le premier transistor bipolaire T1 soit passant, le courant I1 circulant à travers l'électroaimant 21a est maintenu. Ainsi, le premier transistor bipolaire T1 constitue des moyens de génération du signal électrique, ici le courant à travers l'électroaimant 21a, adaptés à maintenir les moyens de commutation 21 (ici le relais) dans le second mode.

Ainsi, lorsque l'utilisateur relâche le bouton 30, le premier transistor bipolaire T1 est chargé d'assurer la circulation du courant I1 à travers l'électroaimant 21 a.

Le module électrique d'interface 10 est alors alimenté par le deuxième signal d'alimentation V_{cc2}, Par conséquent, le module électrique d'interface 10 peut fonctionner normalement, pouvant ainsi être manipulé par un utilisateur qui veut se servir du four de cuisson 1.

Lorsque le four de cuisson 1 doit être placé en mode veille, des moyens de commande 22 génèrent un signal de commande de veille V_{cv}.

Ici, ces moyens de commande 22 comportent un microcontrôleur chargé de la gestion du fonctionnement du four de cuisson 1.

Dans ce mode de réalisation, des fonctionnalités du four de cuisson 1 qui doivent être en fonctionnement même si le four de cuisson 1 est en mode veille, ne sont pas assurées par ces moyens de commande 22. Ainsi, par exemple, la gestion de la sécurité du four de cuisson 1 ou le compteur de l'heure courante sont gérés par d'autres moyens qui sont toujours alimentés, le four de cuisson 1 étant en mode veille ou de fonctionnement.

La mise en mode veille d'un four de cuisson est classique et n'a pas besoin d'être décrite de manière plus détaillée ici.

Comme décrit ci-dessus, dans ce mode de réalisation, les moyens de commande 22 comportent le second transistor bipolaire T2. Ce second transistor bipolaire T2 est commandé par le signal de commande de veille V_{cv}.

Lorsque le four de cuisson 1 est placé en mode veille, les moyens de commande 22 du mode veille génèrent le signal de commande de veille V_{cv} à une valeur prédéterminée de façon à ce que le transistor T2 soit en état saturé. Ainsi, le courant 12 circulant à travers la première résistance R1 (qui sert à polariser le premier transistor bipolaire T1 en état saturé lorsque le four de cuisson 1 se trouve en mode de fonctionnement) est dérivé vers le second transistor bipolaire T2. Par conséquent, le courant I1 traversant l'électroaimant 21 a du relais 21 disparaît, l'interrupteur 21 b étant ainsi ouvert. Ainsi, le relais 21 se trouve dans son premier état et le deuxième signal d'alimentation V_{cc2} n'est pas généré. Par conséquent, le module électrique d'interface 10 n'est pas alimenté.

Le dispositif de gestion d'alimentation 20 du module électrique d'interface 10 et ce dernier 10 restent dans cet état jusqu'à ce que l'utilisateur pousse le bouton 30 afin de réveiller le module électrique d'interface 10.

La seconde résistance R2 et le condensateur C1 génèrent un retard sur la génération du troisième signal d'alimentation V_{cc3}. En effet, le condensateur C1 permet de fournir une réserve d'énergie locale pour l'alimentation des moyens de commande 22 pendant le temps de commutation (d'ouverture et de fermeture) de l'interrupteur 21 b du relais 21, évitant ainsi que le mode du four de cuisson 1 oscille entre le mode de fonctionnement et le mode veille.

La décision d'établir le four de cuisson 1 en mode veille, peut venir des moyens de commande 22, ou du module électrique d'interface 10. Lorsque l'ordre provient de ce dernier, le module électrique d'interface 10 transmet la commande aux moyens de commande 22 à travers le signal d'entrée/sortie COM. Ce signal d'entrée/sortie COM est à titre d'exemple nullement limitatif, un signal logique binaire.

Dans un autre mode de réalisation, dans lequel les moyens de commande 22 assurent par exemple la surveillance de la sécurité du four de cuisson 1, ou le contrôle du compteur de l'heure courante, ces moyens de commande 22 sont alimentés par le premier signal d'alimentation V_{cc1}. Ainsi, les moyens de commande 22 restent alimentés lorsque le four de cuisson 1 est en mode veille, et peuvent continuer à assurer certaines fonctions du four de cuisson 1 nécessaires, que le four de cuisson 1 soit en mode veille ou en mode de fonctionnement. Dans ce mode de réalisation, la seconde résistance R2 est remplacée par une quatrième résistance (non représentée) disposée entre le signal d'alimentation V_{cc1} et le troisième signal d'alimentation V_{cc3}. Ainsi, les moyens de commande 22 sont alimentés lorsque le relais 21 se trouve dans son premier état (le deuxième signal d'alimentation V_{cc2} n'étant pas généré).

On notera alors, que lorsque le four de cuisson 1 se trouve en mode de fonctionnement, le module électrique d'interface 10 est alimenté afin de fonctionner normalement, et que lorsque le four de cuisson 1 se trouve en mode veille, le module électrique d'interface 10 n'est pas alimenté. Ainsi, en mode veille, la puissance consommée par ce module électrique d'interface 10 est sensiblement nulle, et par conséquent, la consommation de puissance du four de cuisson 1 en mode veille est réduite.

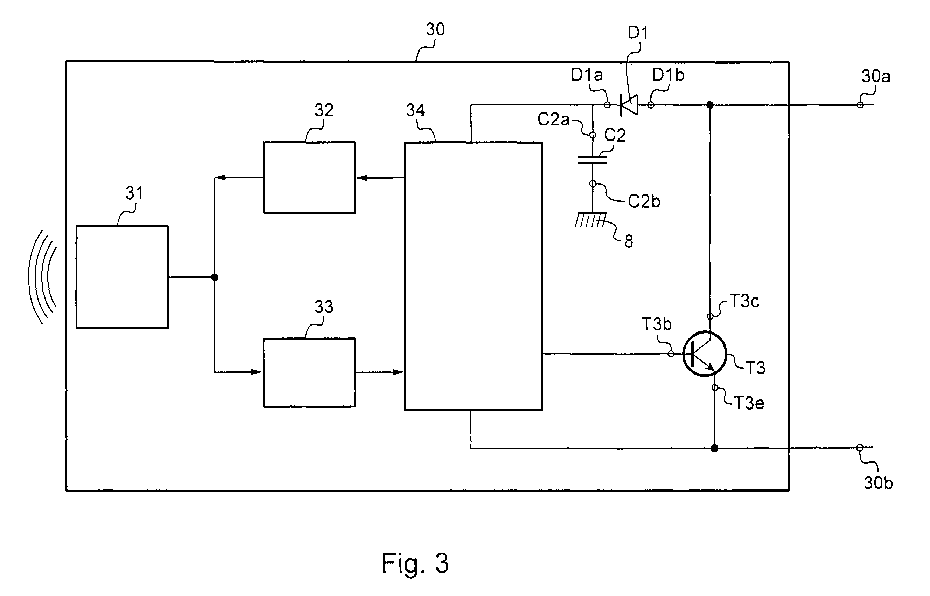

On va décrire ensuite, en référence à la figure 3 un mode de réalisation du bouton dédié 30.

Dans cet exemple, le bouton dédié 30 est constitué d'une touche sensitive.

Dans une touche sensitive 30, le positionnement d'un élément conducteur en vis-à-vis d'une surface conductrice 31, comme par exemple le doigt d'un utilisateur, génère un niveau d'un signal qui est injecté par une logique d'injection 32. Ce niveau est détecté par une logique de détection 33. Le fonctionnement de la touche sensitive 30 est géré par des moyens de traitement 34.

Le fonctionnement des éléments de la touche sensitive 30 ci-dessus sont connus de l'homme du métier et ne seront pas décrits ici en détail.

Dans le mode de réalisation décrit, la touche sensitive 30 comporte en outre une diode D1, un second condensateur C2 et un troisième transistor bipolaire T3.

La cathode D1a de la diode D1 est reliée aux moyens de traitement 34, ainsi qu'à une première borne C2a du second condensateur C2. Une seconde borne C2b du second condensateur C2 est reliée au potentiel de référence 8. L'anode D1b de la diode D1 est reliée au collecteur T3c du troisième transistor T3. La base T3b du troisième transistor T3 est reliée aux moyens de traitement 34. Un premier signal de sortie 30a est pris à l'anode D1b de la diode D1 et un second signal de sortie 30b à l'émetteur T3e du troisième transistor T3.

Le premier signal de sortie 30a est relié au collecteur T1c du premier transistor bipolaire T1 du dispositif de gestion de l'alimentation 20, et le second signal de sortie 30b à l'émetteur T1 e du premier transistor bipolaire T1.

On va décrire ensuite le fonctionnement de la touche sensitive selon ce mode de réalisation.

Lorsque le four de cuisson 1 est en mode veille, les moyens de traitement 34 commandent le troisième transistor bipolaire T3 de façon à ce qu'il ne soit pas passant. Ainsi, les éléments de la touche sensitive 30 sont alimentés par la différence de potentiel existante entre les deux signaux de sortie 30a, 30b. Le condensateur C2 est alors chargé afin de constituer une réserve d'énergie.

Lorsque l'utilisateur exerce une action sur la touche sensitive 30, cette action étant le positionnement de son doigt en vis-à-vis de la surface conductrice 31, les moyens de traitement 34 détectent cette action. Ils commandent alors le troisième transistor T3 de façon à ce qu'il devienne passant.

Du fait que le troisième transistor T3 soit passant, un fort courant apparaît entre les sorties 30a, 30b de la touche sensitive 30. Ce fort courant est le courant I₁ qui traverse l'électroaimant 21a du relais 21.

En outre, la différence de potentiel entre les sorties 30a, 30b de la touche sensitive 30 dévient négligeable. Par conséquent, les moyens de traitement 34 ne peuvent pas être alimentés, et le condensateur C2, qui avait été chargé lorsque le four de cuisson 1 était en mode veille, assure cette alimentation pendant une période de temps prédéfinie.

Cette période de temps prédéfinie présente une valeur permettant que l'interrupteur 21 b du relais 21 soit fermé et que le premier transistor bipolaire T1 soit en état passant de façon à ce qu'il maintienne la circulation du courant I₁ à travers l'électroaimant 21a.

A titre d'exemple nullement limitatif, cette période de temps prédéfinie présente une valeur d'environs 30ms.

Bien entendu, cette valeur prédéfinie peut présenter des valeurs diverses.

On notera que dans cette situation, la diode D1 évite la décharge du condensateur C2 à travers le troisième transistor T3.

Pendant le temps que le condensateur C2 assure l'alimentation des moyens de traitement 34, l'interrupteur 21 b du relais 21 se ferme, et le premier transistor bipolaire T1 prend la relève pour le maintien du courant dans l'électroaimant 21 a du relais 21.

Une fois que le condensateur C2 est déchargé, la touche sensitive 30 n'est plus alimentée. Ainsi, la touche sensitive 30 n'est pas alimentée lorsque le four de cuisson 1 est en mode de fonctionnement.

Par conséquent, toute action sur la touche sensitive 30 n'a aucune réaction sur le four de cuisson 1.

On notera, que lorsque le four de cuisson 1 se trouve en mode veille, les moyens de commutation 21 se trouvent dans le premier mode, le module électrique d'interface 10 n'étant pas alimenté et le bouton dédié 30 étant alimenté.

Au contraire, lorsque le four de cuisson 1 se trouve en mode de fonctionnement, les moyens de commutation 21 se trouvent dans le second mode, le module électrique d'interface 10 étant alimenté et le bouton dédié 30 n'étant pas alimenté.

Grâce à cette caractéristique, le four de cuisson 1 ne sera pas mis par exemple en mode veille à cause d'une fausse manipulation de l'utilisateur.

En outre, la touche sensitive n'incrémente pas la consommation de puissance du four de cuisson 1 lorsqu'il est en mode de fonctionnement.

Dans un autre mode de réalisation, les moyens d'actionnement du réveil 30 comportent un bouton poussoir. Dans cet exemple, lorsque le four de cuisson 1 est en mode veille la consommation de puissance est nulle.

Ainsi, grâce à la présente invention, la consommation de puissance d'un appareil électroménager qui se trouve en état de veille est réduite.

Bien entendu, de nombreuses modifications peuvent être apportées à l'exemple de réalisation décrit précédemment sans sortir du cadre de l'invention.

Ainsi, le dispositif de gestion d'alimentation d'un module électrique d'interface entre un appareil électroménager et un utilisateur pourrait être employé dans d'autres appareils électroménagers, par exemple une table de cuisson, une cuisinière, un lave-linge et/ou sèche linge ou un lave-vaisselle.

## Revendications

1. Dispositif de gestion de l'alimentation d'un module électrique d'interface (10) entre un appareil électroménager (1) et un utilisateur, **caractérisé en ce qu'**il comporte des moyens de commutation (21) de l'alimentation dudit module électrique d'interface (10), lesdits moyens de commutation (21) étant adaptés à être placés dans un premier mode dans lequel ils sont adaptés à couper l'alimentation dudit module électrique d'interface (10) lorsque l'appareil électroménager (1) est en état de veille, et dans un second mode dans lequel ils sont adaptés à rétablir l'alimentation coupée dudit module électrique d'interface (10) lorsqu'une action est exercée par l'utilisateur sur un bouton dédié (30).

2. Dispositif de gestion conforme à la revendication 1, **caractérisé en ce que** lorsqu'une action est exercée par l'utilisateur sur ledit bouton dédié (30), ledit bouton dédié (30) génère un signal électrique (I₁) adapté à placer les moyens de commutation (21) dans ledit second mode.

3. Dispositif de gestion conforme à la revendication 1, **caractérisé en ce qu'**il comporte des moyens de génération (T1) dudit signal électrique (I₁) adaptés à maintenir lesdits moyens de commutation dans ledit second mode.

4. Dispositif de gestion conforme à l'une des revendications 1 à 3, **caractérisé en ce que** ledit bouton dédié (30) est un bouton mécanique, notamment un bouton poussoir.

5. Dispositif de gestion conforme à l'une des revendications 1 à 3, **caractérisé en ce que** ledit bouton dédié (30) est un bouton électronique, notamment une touche sensitive, comportant deux bornes de sortie (30a, 30b) adaptées à être connectées audit dispositif de gestion de l'alimentation (20) et un interrupteur (T3) comprenant deux bornes (T3c, T3e) reliées respectivement auxdites bornes de sortie (30a, 30b), lesdites bornes de sortie (30a, 30b) étant adaptées à alimenter ledit bouton dédié (30) et ledit interrupteur (T3) étant adapté à être ouvert lorsque l'appareil électroménager (1) est en mode veille et à être fermé lorsque l'appareil électroménager (1) est en mode de fonctionnement.

6. Dispositif de gestion conforme à la revendication 5, **caractérisé en ce que** ledit bouton dédié (30) comporte des moyens de stockage d'énergie (C2) adaptés à alimenter ledit bouton dédié (30) pendant une période de temps prédéfinie pendant laquelle lesdits moyens de commutation (21) sont placés dans le second mode.

7. Dispositif de gestion conforme à l'une des revendications 1 à 6, **caractérisé en ce que** des moyens de commande (22) sont adaptés à générer un signal de commande de veille (V_{CV}) adapté à commander lesdits moyens de commutation (21) dans ledit premier mode.

8. Dispositif de gestion conforme à l'une des revendications 1 à 7, **caractérisé en ce que** lesdits moyens de commutation (21) de l'alimentation comportent un relais électromécanique (21).

9. Appareil électroménager, notamment four de cuisson, comportant un module électrique d'interface (10) entre ledit appareil électroménager (1) et un utilisateur, **caractérisé en ce qu'**il comporte un dispositif de gestion de l'alimentation (20) dudit module électrique d'interface (10) conforme à l'une des revendications 1 à 8 et **en ce que** ledit module électrique d'interface (10) comporte un bouton dédié (30).
